# EUROPÄISCHE PATENTSCHRIFT

(11) **EP 4 264 221 B1**
(45) Veröffentlichungstag und Bekanntmachung des Hinweises auf die Patenterteilung: **02.04.2025**
(21) Anmeldenummer: 22700991.7
(22) Anmeldetag: 21.01.2022
(51) Int. Cl.: G01M 13/04, G01M 11/08, G01M 5/00

(54) **VERFAHREN UND VORRICHTUNG ZUR DETEKTION UND ÜBERWACHUNG EINER STRUKTURVERÄNDERUNG BEI STRUKTURBAUTEILEN VON WINDKRAFTANLAGEN**
METHOD AND DEVICE FOR DETECTING AND MONITORING A STRUCTURAL CHANGE OF STRUCTURAL COMPONENTS OF WIND TURBINES
PROCÉDÉ ET DISPOSITIF DE DÉTECTION ET DE SURVEILLANCE D'UN CHANGEMENT STRUCTURAL DE COMPOSANTS STRUCTURAUX DE TURBINES ÉOLIENNES

(30) Priorität: 21.01.2021 DE 102021200506
(43) Veröffentlichungstag der Anmeldung: 25.10.2023
(73) Patentinhaber: Eolotec GmbH, 90429 Nürnberg (DE); Technische Hochschule Nürnberg Georg-Simon-Ohm, 90489 Nürnberg (DE)
(72) Erfinder: ENGELBRECHT, Rainer, 90489 Nürnberg (DE); LOSERT, Wolfgang, 90453 Nürnberg (DE); LUBER, Michael, 90489 Nürnberg (DE); PICK, Mathias, 90429 Nürnberg (DE); VINOGRADOV, Juri, 90489 Nürnberg (DE); ZIEMANN, Olaf, 90489 Nürnberg (DE)
(74) Vertreter: FDST Patentanwälte
(86) Internationale Anmeldenummer: PCT/EP2022/051335
(87) Internationale Veröffentlichungsnummer: WO 2022/157303

(56) Entgegenhaltungen:
- EP-A2- 1 857 672
- WO-A1-2014/147301
- STEPHEN T. KREGER: "Distributed strain and temperature sensing in plastic optical fiber using Rayleigh scatter", FIBER OPTIC SENSORS AND APPLICATIONS VI, vol. 7316, 27 April 2009 (2009-04-27), pages 73160A, XP093162130, Retrieved from the Internet <URL:https://dx.doi.org/10.1117/12.821353> DOI: 10.1117/12.821353

## Beschreibung

Die Erfindung betrifft ein Verfahren sowie eine Vorrichtung zur Detektion und Überwachung einer Strukturveränderung bei Strukturbauteilen von Windkraftanlagen.

### Hintergrund der Erfindung:

In der Industrie hat sich in den letzten zwei Jahrzenten aufgrund des zunehmenden Kostendrucks und Wettbewerbs und moderner Auslegungsverfahren (FEM) zunehmend der Leichtbau von Strukturkomponenten durchgesetzt. Mit den vorteilhaften Gewichts- und Kosteneinsparung sind jedoch auch gleichzeitig höhere Verformungen der Bauteile bei gleicher Beanspruchung und Design verbunden. Diese erhöhten Verformungen stellen insbesondere an Komponenten mit sehr häufigen Lastwechseln besonders hohe Anforderungen. Das Risiko einer frühzeitigen Ermüdung steigt somit deutlich aufgrund von Materialfehlern, Lastabweichung, Korrosion, Temperaturwechsel, Toleranzen oder weiteren Anwendungsparametern. Insbesondere in der Windindustrie ist der Leichtbau sehr weit fortgeschritten und somit teilweise unabdingbar für noch größere Windkraftanlagen. Die zunehmende Flexibilität der Bauteile in Kombination mit der hohen Lastwechselzahl einer Windkraftanlage über mehrere Jahre, beispielsweise über 25 Jahre führen zu einem besonders hohen Schadensrisiko hinsichtlich Ermüdungsrissen.

Den Stand der Technik bilden aktuell überwiegend die üblichen Materialuntersuchungsverfahren mit Ultraschall und Wirbelstromprüfung die in der Windkraft eingesetzt werden. Diese sind jedoch auf den Einsatz per Hand und mittels Prüffachkraft beschränkt und lassen sich oftmals nicht automatisieren und/oder an sämtlichen Materialen und Bauteilgeometrien verwenden. Ferner gibt es beispielsweise für die Überwachung von Rotorblättern zahlreiche Ansätze die in den letzten Jahren entwickelt wurden:
Die CN 207 571 112 U nutzt ein Dünnschichtmaterial, welches in, auf und an das Strukturbauteil laminiert wird. Dieses stromleitende Material wird mit einem Sender und Empfänger versehen und sollte es zu einem Riss im Bereich des leitenden Dünnschichtmaterials kommen wird der Stromkreis unterbrochen oder beeinflusst. Dieses Signal wird für die Detektion und Bewertung des Risses genutzt.

Einen ähnlichen Ansatz verfolgt auch die EP 3 467 303 A1 wobei hier auf eine indirekte Detektion der Risse am Blattlagerring gesetzt wird. Über eine Mutter eines Blattbolzens wird eine spezielle Kappe gesetzt die wiederum eine leitende Schicht oder einen Leiter aufweist. Reißt nun der Lagerring, entstehen an den Muttern zusätzliche Lasten, so dass diese nach einer gewissen Zeit ermüden und reißen. Sobald eine jeweilige Mutter reißt wird auch dieser Stromkreis auf der umschließenden Kappe unterbrochen und der Riss wird detektiert. Dieses System zeigt eine hohe Komplexität, was sich im Hinblick auf die Zuverlässigkeit und Langlebigkeit negativ auswirken kann.

Einen weiteren Ansatz beschreibt CN 110 554 090 A, welche auf eine Schallauswertung bei der Detektion von Rissen von Blattlagern setzt. Dabei werden die Auffälligkeiten in Schallpegeln analysiert, um Rückschlüsse auf einen Schaden zu ziehen. In der Praxis wird sich das jedoch sehr schwierig gestalten, da zahlreiche Einflüsse diese Messungen überlagern und eine zuverlässige Auswertung erschweren.

Ein weiterer Ansatz ist die Überwachung und Detektion von Rissen in Strukturbauteilen mittels Kameralösungen gemäß CN 110 111 328 A oder CN 103 984 952 A, wobei mittels Bildauswertung versucht wird, einen Riss zu erkennen und seine Ausprägung zu bewerten. Hier sind jedoch die sehr unterschiedlichen Lichtverhältnisse, Ansichten und Verunreinigung auf Windkraftanlagen limitierend.

In WO 2014/147301 A1 wird ein Verfahren zur Überwachung eines Teils einer Windkraftanlage beschrieben, bei dem ein Lichtwellenleiter am Bauteil zwischen zwei Punkten befestigt wird, wobei auf den Lichtwellenleiter eine Vorspannung aufgebracht wird.

Gemäß EP 1 857 672 A2 wird ein Verfahren zur Überwachung eines Bauteils einer Windkraftanlage beschrieben, bei dem ein Lichtwellenleiter in das Bauteil einlaminiert wird, sodass bei einem Riss des Bauteils auch der Lichtwellenleiter beschädigt wird.

### Aufgabe der Erfindung:

Der Erfindung liegt die Aufgabe zu Grunde, eine einfache und wirtschaftliche Möglichkeit zur Überwachung und frühzeitigen Detektion von Materialrissen in Strukturbauteilen bei Windkraftanlagen anzugeben, um das Schadensrisiko von Rissen zu reduzieren.

Dabei soll insbesondere die periodisch wechselnde Belastung der Strukturbauteile in Windkraftanlagen berücksichtigt werden. Die Überwachung und Rissdetektion soll weiterhin unabhängig von Umgebungseinflüssen, langzeitstabil und exakt sein.

### Lösung der Aufgabe:

Die Aufgabe wird gelöst durch ein Verfahren mit den Merkmalen des Anspruchs 1. Bevorzugte Weiterbildungen sind in den abhängigen Ansprüchen enthalten.

Zur Detektion und Überwachung einer Strukturveränderung bei Strukturbauteilen von Windkraftanlagen wird gemäß der Erfindung ein Lichtwellenleiter eingesetzt, welcher entlang einer - im Hinblick auf die Strukturveränderung - zu überwachenden Region im Bereich der Oberfläche des zumindest einen Strukturbauteils geführt wird. Der Lichtwellenleiter wird dabei nahe der Oberfläche oder auch unmittelbar anliegend an der Oberfläche geführt und befestigt, und zwar derart, dass eine Strukturveränderung zu einer Längenänderung, also zu einer Dehnung oder Stauchung des Lichtwellenleiters führt. Zur Detektion und Überwachung wird weiterhin ein Messsignal in den Lichtwellenleiter eingespeist, welches diesen durchläuft. Das Messsignal wird beispielsweise kontinuierlich oder auch wiederkehrend zu definierten Messzeiten eingespeist. Das Messsignal wird im Hinblick auf eine Längenänderung, also im Hinblick auf eine Längung/Stauchung des Lichtwellenleiters ausgewertet. Wird eine solche erfasst, wird dies als ein Indiz für eine Strukturveränderung gewertet und es wird auf eine solche zurückgeschlossen. Bevorzugt wird neben einer qualitativen Aussage, dass eine Strukturveränderung vorliegt, auch eine quantitative Aussage über das Maß der Strukturveränderung getroffen.

Bei der Auswertung wird beispielsweise ein Vergleich des Messsignals mit einem Referenzsignal vorgenommen. Das Referenzsignal bildet dabei einen Vergleichszustand des zumindest einen Strukturbauteils ab. Ein solcher Vergleichszustand ist beispielsweise ein Ausgangszustand des zumindest einen Strukturbauteils speziell nach einer (Erst-) Montage zum Zeitpunkt einer Inbetriebnahme der Windkraftanlage beispielsweise nach einem Neubau oder auch nach einer Revision. Das Referenzsignal wird vorzugsweise nach der Montage des zumindest eine Strukturbauteils und nach der Befestigung des Lichtwellenleiters erfasst und als Referenz hinterlegt.

Sofern vorliegend von einer Strukturveränderung bei Strukturbauteilen einer Windkraftanlage gesprochen wird, so wird hierunter sowohl eine Überwachung im Hinblick auf einen Materialriss (nachfolgend kurz: Riss) innerhalb eines Strukturbauteils verstanden, als auch ein Abstand zwischen zwei Strukturbauteilen, die vorzugsweise miteinander verbunden sind und in der Regel unmittelbar aneinander angrenzen. Dieser Abstand wird auch als Klaffung bezeichnet.

Eine Vorrichtung zur Detektion und Überwachung der Strukturveränderung weist den Lichtwellenleiter sowie eine Messeeinheit auf, welche eine Einspeiseeinheit zur Einspeisung des Messsignals sowie eine Auswerteeinheit zur Auswertung des Messsignals nach Durchlaufen des Lichtwellenleiters umfasst. Im montierten Zustand ist der Lichtwellenleiter im Bereich der Oberfläche des zu überwachenden zumindest einen Strukturbauteiles entlanggeführt und dort geeignet befestigt, sodass eine Strukturveränderung zu einer Dehnung des Lichtwellenleiters führt. Die Auswerteeinheit ist derart ausgebildet, dass sie das Messsignal im Hinblick auf eine Längenänderung, also eine Längung (Dehnung) oder Stauchung (Verkürzung) des Lichtwellenleiters auswertet und Rückschlüsse auf eine Strukturveränderung zieht.

Bei einer Überwachung eines (einzigen) Strukturbauteils auf einen Riss wird der Lichtwellenleiter entlang der Oberfläche dieses einen Strukturbauteils geführt wird. Grundsätzlich besteht auch die Möglichkeit, dass der Lichtwellenleiter über mehrere Strukturbauteile hinweg geführt wird, wobei auch hier individuelle Risse innerhalb der einzelnen Strukturbauteile detektiert und / oder überwacht werden.

Im Falle der Überwachung zweier Strukturbauteile im Hinblick auf ihren Abstand zueinander wird der Lichtwellenleiter regelmäßig über eine Trennstelle geführt, die zwischen den beiden Strukturbauteilen ausgebildet ist.

Das Verfahren eignet sich also sowohl zur Detektion und Überwachung von Rissen innerhalb eines Bauteils als auch zur Detektion und Überwachung von Trennstellen zwischen Bauteilen, bei denen also ein Abstand zwischen den Bauteilen im Hinblick auf Änderungen und damit auf ein Auseinanderklaffen (Klaffungen) überwacht wird.

Typischerweise sind die Bauteile durch Flansche und beispielsweise über Schrauben oder Schweißverbindungen miteinander verbunden. Der Lichtwellenleiter ist über die Trennstelle zwischen den beiden Flanschen geführt.

Bei der Trennstelle handelt es sich beispielsweise um die Verbindung von zwei Turmsegmenten, um die Verbindung zweiter Bauteile des Rotors (bestehend aus Rotorwelle, Nabe und Rotorblättern), beispielsweise zwischen Rotorwelle und Nabe oder Nabe und Rotorblatt.

Die Erfindung nutzt hierbei aus, dass eine Dehnung des Lichtwellenleiters zu einer charakteristischen Veränderung des Messsignals führt, sodass durch die Auswertung des Messsignals auf eine Dehnung und insbesondere auch auf das Maß einer solchen Dehnung zurückgeschlossen werden kann. Auf Basis der Dehnung wird auf die Strukturveränderung zurückgeschlossen. D. h. die Dehnung wird als Kriterium für die Strukturveränderung herangezogen.

Bei dem Lichtwellenleiter handelt es sich allgemein um einen dehnbaren Lichtwellenleiter, welcher also in Längsrichtung eine gewisse Elastizität aufweist. Diese Elastizität ist für die bei Windkraftanlagen auftretenden Wechselbeanspruchungen aufgrund der sich beispielsweise periodisch ändernden Lastzustände von besonderer Bedeutung. Durch die Elastizität werden daher (periodisch) wiederkehrende Strukturveränderungen zuverlässig erfasst.

Durch die Verwendung eines Lichtwellenleiters ist die gesamte Messvorrichtung auch sehr robust und unempfindlich gegenüber äußeren Umwelteinflüssen und zudem extrem langlebig.

Bei dem Lichtwellenleiter handelt es sich um einen polymeren Lichtwellenleiter (POF: Polymer Optical Fiber). Dieser weist auf oder besteht aus einer optischen Polymerfaser. Derartige polymere Lichtwellenleiter sind grundsätzlich bekannt und werden beispielsweise in der Datenverarbeitung verwendet. Diese speziellen Lichtwellenleiter eignen sich besonders gut, um Veränderungen in Form von einer Längenänderung der Faser in einen messbaren und quantifizierbaren Messwert umzusetzen. Gegenüber anderen Lichtwellenleitern lassen sich POF sehr viel stärker dehnen, bevor sie zerstört werden.

Der Lichtwellenleiter wird auf dem zumindest einen Strukturbauteil positioniert und mit diesem stoffschlüssig und ggf. weiterhin kraft- oder formschlüssig verbunden. Erfährt das Strukturbauteil nun beispielsweise eine Wechsellast und es kommt zu einem Riss, wird sich dieser Lichtwellenleiter mit dem Strukturbauteil verformen und entsprechend dehnen.

Als Messsignal wird in den Lichtwellenleiter vorzugsweise zumindest ein Lichtimpuls, eine Folge von Lichtimpulsen und / oder ein moduliertes Lichtsignal eingespeist. eingespeist. Speziell wird ein bezüglich der optischen Leistung, Wellenlänge oder Polarisation mit beliebigen Frequenzen moduliertes Lichtsignal eingespeist.

Es wird vorzugsweise die Laufzeit des Messsignals durch den Lichtwellenleiter in an sich bekannter Weise ermittelt. Beispielsweise wird hierzu eine Phasenmessung zwischen dem gesendeten und empfangenen modulierten Lichtsignal (moduliertes Messsignal) - also insbesondere zwischen der gesendeten und der empfangenen Modulation - durchgeführt. Alternativ kann auch direkt die Laufzeit eines (kurzen) Lichtimpulses erfasst werden. Ein jeweiliger kurzer Lichtimpuls weist beispielsweise eine Pulsdauer im Bereich von wenigen Mikro- oder Nanosekunden auf. Das Messsignal wird insbesondere durch einen Laser erzeugt.

Bei dem modulierten Lichtsignal handelt es sich beispielsweise um ein dauerhaftes Lichtsignal, speziell Laserlicht, das über eine bestimmte Zeitdauer einer Messung (Messzeit) moduliert, insbesondere sinusförmig moduliert eingespeist wird. Es erfolgt also eine Amplitudenmodulation der Lichtleistung. Die Zeitdauer beträgt dabei typischerweise zumindest mehreren Sekunden, insbesondere mehreren 10 Sekunden bis hin zu Minuten. Beispielswiese liegt die Messzeit zwischen 1 und 5 Minuten und beispielsweise bei 2 Minuten. Grundsätzlich ist diese Messzeit jedoch nicht zwingend beschränkt.

Die Laufzeit wird hierbei beispielsweise aus der Schwingungsphase der gesendeten und der empfangenen Modulation ermittelt. Die Laufzeit ist proportional zum Phasenunterschied zwischen gesendetem und empfangenen Signal.

Durch die unterschiedliche Laufzeit des Messsignals im Lichtwellenleiter infolge der Längenänderung des Lichtwellenleiters werden mittels einer geeigneten Optoelektronik die Längenänderung erfasst und ausgewertet und es werden Rückschlüsse auf einen aufgetretenen Riss oder eine Klaffung gezogen.

Alternativ oder ergänzend hierzu wird zur Messung und Detektion eines Risses oder einer Klaffung in bevorzugter Ausgestaltung zumindest ein Parameter des Messsignals ausgewertet. Bei diesem zumindest einen Parameter handelt sich beispielsweise um einen oder mehreren der folgenden Parameter: (gesamte) Lichtleistung, Lichtverteilung im Faserquerschnitt (Querschnitt des Lichtwellenleiters), die Verteilung der Lichtaustrittswinkel aus dem Lichtwellenleiter, Amplitude und Phase einer Modulation der Lichtwelle bei einer oder mehrerer Modulationsfrequenzen, die Polarisationseigenschaft des aus der Faser austretenden Lichtes. Ein jeweiliger Parameter wird in geeigneter Weise erfasst und gemessen und ausgewertet. Bevorzugt werden mehrere dieser Parameter in Kombination erfasst und ausgewertet.

Um die Messgenauigkeit zu erhöhen ist der Lichtwellenleiter bevorzugt mehrfach über die zu überwachende Region der zumindest einen Strukturkomponente gelegt. Im Falle eines Risses verläuft daher der Lichtwellenleiter mehrfach über den Riss, sodass der Lichtwellenleiter mehrfach gedehnt und die Laufzeit des Messsignals entsprechend verlängert wird. Das ermöglicht eine detailliertere Bestimmung des Risses.

Wird der Lichtwellenleiter zur Überwachung einer Klaffung eingesetzt, so wird er vorzugsweise mehrfach über die Trennstelle zwischen den beiden Strukturbauteilen geführt.

In beiden Fällen ist in bevorzugter Weiterbildung vorgesehen, dass der Lichtwellenleiter wellen- oder mäanderförmig verlegt ist. D.h. der Lichtwellenleiter verläuft mehrfach gebogen über die zu überwachende Region hinweg.

Insbesondere ist der Lichtwellenleiter wellenförmig über den Umfang einer Verbindung, insbesondere Flanschverbindung zwischen zwei Strukturbauteilen geführt. Bevorzugt ist der Lichtwellenleiter dabei über die Trennstelle zwischen den beiden Strukturbauteilen wiederholt geführt und verläuft beispielsweise wellenförmig über die Trennstelle und über vorzugsweise den gesamten Umfang hinweg.

In bevorzugter Ausgestaltung werden großflächige Bereiche überwacht. Dies ist ein besonderer Vorteil des beschriebenen Verfahrens mit dem Lichtwellenleiter, da dieser über potentiell kritische Flächen verlegt werden kann, ohne dass der Ort einer möglichen Rissentstehung genau bekannt sein muss. Im Unterschied hierzu ist z.B. bei Dehnungsmessstreifen häufig der genaue Ort einer möglichen Rissentstehung erforderlich.

Unter einem großflächigen Bereich wird insbesondere ein Bereich mit einer Fläche größer 0,2 m², vorzugsweise größer 0,5m² oder auch mehr verstanden. Insbesondere ist eine effektive Messlänge des eingesetzten Lichtwellenleiters >0,5 m, insbesondere >1 m bis hin zu mehreren Metern (z.B. 1 m -10 m oder mehrere 10 m). Die effektive Messlänge ist dabei die Länge des Lichtwellenleiters, die mit dem Bauteil fest verbunden ist und somit geeignet ist zur Detektion von Rissen / Klaffungen.

In bevorzugter Ausgestaltung ist vorgesehen, dass der Lichtwellenleiter um den Umfang des zumindest einen Strukturbauteils geführt ist. Hierdurch wird der gesamte Umfang der Strukturbauteils im Hinblick auf einen auftretenden Riss überwacht. Gemäß einer ersten Variante wird der Lichtwellenleiter dabei radial außen, also an einer außenseitigen Umfangsfläche entlang verlegt.

Gemäß einer alternativen Ausführungsvariante wird der Lichtwellenleiter an einer Stirnseite des zu überwachenden Strukturbauteils entlanggeführt und zwar insbesondere radial außen, so dass also der Lichtwellenleiter entlang und damit um den Umfang geführt ist. Das Strukturbauteil weist beispielsweise eine ringförmige Stirnfläche auf, entlang derer der Lichtwellenleiter geführt ist. Beispielsweise handelt es sich um ein ring- oder wellenförmiges Strukturbauteil, insbesondere um einen Lagerring.

Bei dem zumindest einen zu überwachenden Strukturbauteil handelt es sich vorzugsweise um eines oder mehrere der Bauteile Rotorlagerring, Blattlagerring, Turmsegment, Rotornabe, Rotorblatt, Maschinenträger, Fundament.

Eine Windkraftanlage weist allgemein einen Turm auf, welcher über ein bodenseitiges Fundament am Boden verankert ist. Der Turm besteht dabei typischerweise aus mehreren Turmsegmenten, die in der Regel rohrförmig ausgebildet und übereinander angeordnet sind. Am oberen Ende des Turmes ist die sogenannte Gondel angeordnet innerhalb derer ein Hauptlager zur Lagerung eines Rotors sowie typischerweise weiterhin ein Generator zur Erzeugung von elektrischer Energie angeordnet sind. Weiterhin kann je nach Ausführungsvariante ein Getriebe vorgesehen sein. Das Hauptlager und/oder der Generator sind dabei typischerweise auf einem sogenannten Maschinenträger angeordnet. Bei diesem handelt sich daher um ein spezielles Traggestell für diese Komponenten.

Der Rotor weist üblicherweise eine Rotornabe auf, an der die einzelnen Rotorblätter befestigt sind. Die Rotorblätter sind dabei typischerweise um einen gewissen Winkel drehbar an der Rotornabe gelagert. Hierzu ist ein Blattlager mit dem erwähnten Blattlagerring vorgesehen. Der Rotor ist insgesamt rotierbar mittels eines Hauptlagers, welches den Rotorlagerring aufweist, gelagert.

In bevorzugter Ausgestaltung wird die Position des Risses in Bezug auf die Länge des Lichtwellenleiters ermitteln. Das ermöglicht die genaue Lokalisierung der Position des Risses, was insbesondere bei einer sehr großflächigen und unzugänglichen Beurteilung wie Turmsegmenten, Maschinenträgern oder Rotornabe und -blättern vorteilhaft ist.

Zur ortsaufgelösten Messung ist beispielsweise eine Segmentierung der zu überwachenden Region und damit des Messbereiches vorgesehen. Speziell ist bei dieser Segmentierung vorgesehen, dass für unterschiedliche Bereiche (Segmente) unterschiedliche Lichtwellenleiter oder Lichtwellenleiter-Abschnitte eingesetzt werden.

Alternativ oder ergänzend hierzu wird zur Lokalisation der Position des Risses zumindest ein Parameter des Messsignals ausgewertet. Bei diesem zumindest eine Parameter handelt sich beispielsweise um einen oder mehreren der folgenden Parameter: (gesamte) Lichtleistung, Lichtverteilung im Faserquerschnitt, die Verteilung der Lichtaustrittswinkel aus dem Lichtwellenleiter, Amplitude und Phase einer Modulation der Lichtwelle bei einer oder mehrerer Modulationsfrequenzen, die Polarisationseigenschaft des aus der Faser austretenden Lichtes. Ein jeweiliger Parameter wird in geeigneter Weise erfasst und gemessen und ausgewertet. Bevorzugt werden mehrere dieser Parameter in Kombination erfasst und ausgewertet.

In einer bevorzugten Ausgestaltung wird beispielsweise ausgenutzt, dass eine lokale Längenänderung, wie beispielsweise eine Dehnung des Lichtwellenleiters die räumliche Lichtverteilung innerhalb des Lichtwellenleiters verändert, und diese Änderung aufgrund der Streueigenschaften des Lichtwellenleiters je nach Position der Dehnung bezüglich der gesamten Faserlänge an der Lichtaustrittsseite eine unterschiedliche Änderung eines der oben genannten Parameter verursacht. Diese Änderung wird erfasst und im Hinblick auf die angestrebte Ortsbestimmung des Risses ausgewertet.

Das Messsignal und damit das Licht wird in bevorzugter Ausgestaltung in Transmission und /oder in Reflexion erfasst. Bei einer Transmissionsmessung wird das Messsignal an einem Ende des Lichtwellenleiters eingespeist und am anderen Ende mit der Auswerteeinheit erfasst. Bei einer Reflexion erfolgen die Einspeisung und Auswertung des Messsignals an der gleichen Seite. Bei einer Kombination einer Transmission- und Reflexionsmessung sind an beiden Enden des Lichtwellenleiters jeweils eine Erfassungseinheit/Auswerteeinheit angeordnet. Bei diesen Einheiten handelt sich allgemein um optoelektronische Komponenten, bei denen der Lichtimpuls in ein elektrisches Signal umgesetzt wird.

In einer bevorzugten Ausgestaltung bei einer Erfassung des Lichts in Reflexion - speziell für eine angestrebte Ortsbestimmung - wird ausgenutzt, dass eine lokale Dehnung des Lichtwellenleiters eine lokal erhöhte Abschwächung der Lichttransmission oder eine Änderung einer oder mehrerer anderer der oben genannten Parameter bewirkt. Dies ist insbesondere für polymere Lichtwellenleiter (POF) gegeben, die eine bevorzugte Ausführung darstellen. Durch bekannte Verfahren wie beispielsweise optische Zeitbereichsreflektometrie (optical time-domain reflectometry, OTDR) oder optische Frequenzbereichsreflektometrie (optical frequency domain reflectometry, OFDR) kann die Position bestimmt werden, an der eine oder mehrere der oben genannten Parameter der Lichtwelle durch eine Dehnung verändert wurden.

Bei der Windkraftanlage unterliegen viele Bauteile einer periodisch wiederkehrenden Belastung, die speziell durch die Rotation des Rotors hervorgerufen wird. Dies führt dazu, dass im Falle eines Risses oder auch einer Klaffung eine Breite des Risses oder ein Abstand zwischen den beiden Strukturbauteilen periodisch variiert. Entsprechend unterliegt auch der Lichtwellenleiter einer periodisch wiederkehrenden Belastung, sodass er also periodisch wiederkehrend gedehnt (gestaucht) wird.

Bevorzugt wird zur Auswertung von derartigen periodischen und zyklischen Belastungen zumindest eine und vorzugsweise mehrere, speziell alle der Parameter ausgewählt aus Amplitude, Periode, und Phase einer Grundwelle erfasst und ausgewertet. Die Grundwelle entspricht dabei üblicherweise einer (Rotations-) Periode des (modulierten) Messsignals. Alternativ oder ergänzend wird eine Oberwelle oder es werden mehrere Oberwellen zur Grundwelle erfasst und ausgewertet. Diese Oberwellen beschreiben typischerweise eine von einer Sinusform abweichende Messkurve.

In einer bevorzugten Ausführung werden diese Parameter mit einer harmonischen Analyse des Messsignals gewonnen, wie beispielsweise, aber nicht ausschließlich, einer Fourier-Analyse. Diese Parameter geben Rückschlüsse auf eine Veränderung eines Risses/einer Klaffung im Zeitverlauf. In einer bevorzugten Ausführung werden anhand dieser Parameter und deren zeitlicher Entwicklung typische Muster erkannt, die einen Riss und/oder eine Klaffung sowie deren zeitlicher Veränderung erkennen lassen. In einer weiteren bevorzugten Ausführung werden diese Muster mit Hilfe von Methoden des maschinellen Lernens auf Grundlage einer Vielzahl von Trainingsdaten erkannt.

Neben solchen periodischen, zyklischen Belastungen bestehen auch nicht zyklische, also statische oder quasi statische Belastungen. Während die zyklischen Belastungen typischerweise bei den rotierenden Strukturbauteilen oder den Lagern für diese rotierende Strukturbauteilen auftreten, treten die nichtzyklischen Belastungen insbesondere bei feststehenden Strukturbauteilen wie beispielsweise Turm, Maschinenträger usw. auf. Grundsätzlich können nicht zyklische Belastungen jedoch auch bei den rotierenden Bauteilen auftreten und dort zu Strukturveränderungen führen oder auch umgekehrt, d.h. zyklische Belastungen können auch bei den feststehenden Strukturbauteilen zu Schädigungen führen. Nicht-zyklische Belastungen sind beispielsweise Gewichtskräfte von feststehenden Bauteilen wie Getriebe, Generator, oder Maschinenträger.

Zur Auswertung speziell von solchen nicht zyklischen Belastungen ist eine elektronische Auswertung mit bekannten Methode der Signalverarbeitung und oder speziell mithilfe einer Mustererkennung vorgesehen. Bekannte Beispiele hierfür sind zum Beispiel Korrelationsmethoden mit empirisch bestimmten Musterfunktionen.

In bevorzugter Weiterbildung wird für die Auswertung und damit Überwachung der Strukturveränderungen auf an sich bekannte Methoden des maschinellen Lernens zurückgegriffen. Es handelt sich daher vorzugsweise um ein selbstlernendes System, bei dem für die Auswertung insbesondere eine künstliche Intelligenz eingesetzt wird.

Die Vorrichtung weist allgemein den Lichtwellenleiter, die Einspeiseeinheit sowie die zumindest eine Auswerteeinheit auf. Die Einspeiseeinheit weist dabei typischerweise eine Einheit zur Erzeugung des Messsignals, speziell des Lichtimpulses auf, sowie ein Koppelelement zum Einkoppeln des Messsignals in den Lichtwellenleiter. Zur Erzeugung des Messsignals ist speziell ein sogenannter Lichtwellenemitter, beispielsweise eine LED oder eine Laserdiode, eingesetzt. Auf Seiten der Auswerteeinheit ist korrespondierend eine Empfangseinheit, speziell ein Lichtwellenempfänger für das Messsignal sowie ein Kopplungselement zum Empfang und Auskoppeln des Messsignals aus dem Lichtwellenleiter vorgesehen. Die Koppelemente sind beispielsweise als lösbare Kopplungselemente ausgebildet, so dass bei Bedarf die Einspeiseeinheit und / oder die Auswerteeinheit vom Lichtwellenleiter getrennt werden können. Weiterhin weist insbesondere die Auswerteeinheit ein optoelektronisches Bauteil auf zur Umwandlung des optischen Signals in ein elektrisches Messsignal. Ergänzend ist eine Auswerteelektronik in der Auswerteeinheit integriert, welche das Messsignal auswertet.

Ein Aufführungsbeispiel der Erfindung wird nachfolgend anhand der Figuren näher erläutert. Diese zeigen in stark vereinfachten Darstellungen:
- FIG 1: eine ausschnittsweise Darstellung einer Windkraftanlage
- FIG 2: eine ausschnittsweise Schnitt-Darstellung im Bereich eines Blattlagers.
- FIG 3: einen stark schematisierten Ausschnitt eines Strukturbauteils mit einem Riss und einem darauf angebrachten Lichtwellenleiter,
- FIG 4: eine Messkurve, bei der ein Signal gegenüber der Zeit aufgetragen ist,
- FIG 5: eine Stirnansicht auf ein als Rohr oder Ring ausgebildetes Strukturbauteil mit daran angebrachtem Lichtwellenleiter.

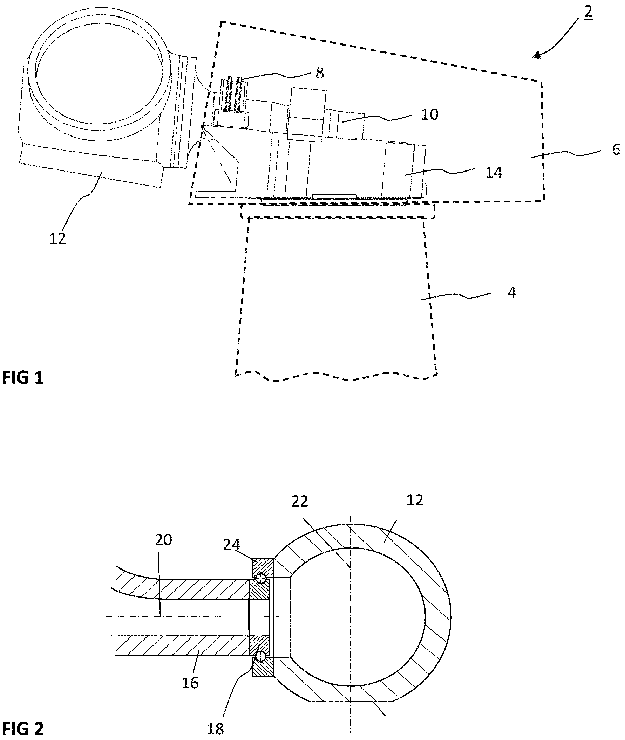

Der typische Aufbau einer Windkraftanlage 2 ist in FIG 1 gezeigt. Die Windkraftanlage 2 weist regelmäßig einen Turm 4 auf, an dessen oberem Ende eine sogenannte Gondel 6 drehbar gelagert ist. Die Gondel 6 definiert zugleich ein Maschinengehäuse, in dem einige wesentliche Komponenten angeordnet sind. Hierzu zählen speziell ein Hauptlager 8 sowie ein hier nicht näher dargestellter Generator und - je nach Anlagentyp - auch ein hier nicht näher dargestelltes Getriebe. Das Hauptlager 8 dient im Ausführungsbeispiel zur Lagerung einer Rotorwelle 10, die über einen Ringflansch mit einer Rotornabe 12 eines Rotors verbunden ist. Innerhalb der Gondel 6 ist ein Maschinenträger 14 angeordnet, an dem unter anderem das Hauptlager 8 und Getriebe sowie Generator befestigt sind.

Wie insbesondere anhand der ausschnittsweisen Darstellung der FIG 2 zu erkennen ist, sind an der Rotornabe 12 um den Umfang verteilt mehrere Rotorblätter 16 mithilfe eines Blattlagers 18 um eine Drehachse 20 drehbar gelagert. In FIG 2 ist eine Rotationsachse 22 eingezeichnet, um die der gesamte Rotor und damit die Rotornabe 12 sowie die Rotorwelle 10 im Betrieb rotieren. Das Blattlager 18 weist einen inneren sowie einen äußeren Blattlagerring 24 auf.

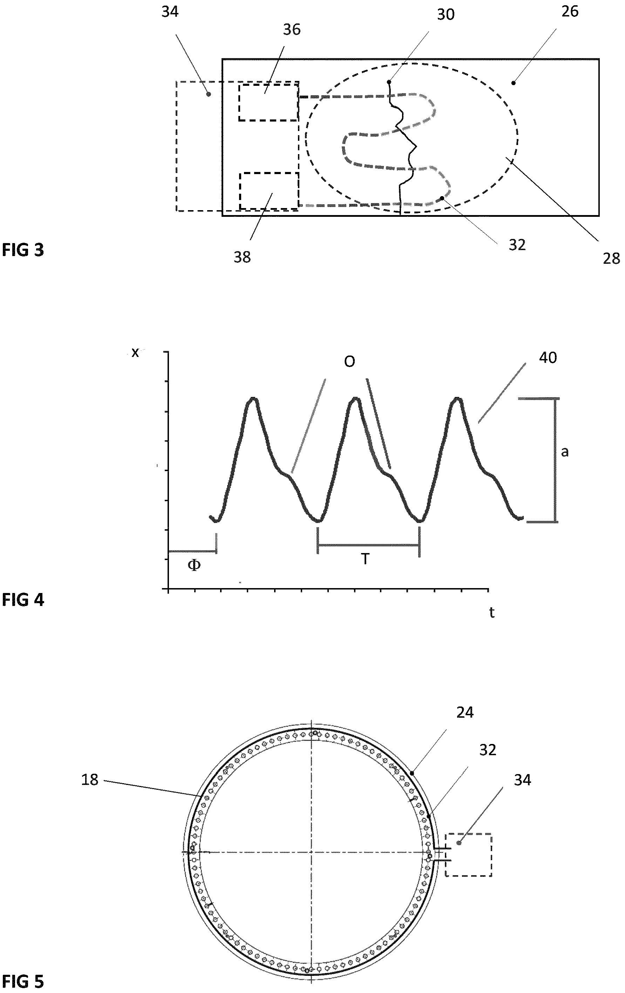

FIG 3 zeigt einen Ausschnitt eines Strukturbauteils 26 der Windkraftanlage 2, welches einen Riss 28 beispielsweise aufgrund einer Materialermüdung aufweist. Speziell handelt es sich bei dem Strukturbauteil 26 um ein Blattlager 18, insbesondere um eine Umfangsseite eines der Blattlagerringe 24.

An einer Oberfläche des Strukturbauteils 26 wird in einer zu überwachenden Region 28, in der die Gefahr der Bildung eines Risses 30 besteht oder in der bereits ein Riss 30 vorliegt, ein Lichtwellenleiter 32 befestigt. Dieser ist an einer Messeinheit 34 angeschlossen, die zusammen mit dem Lichtwellenleiter 32 ein (Mess-) Vorrichtung zur Detektion und Überwachung einer Strukturveränderung bei Strukturbauteilen 26 von Windkraftanlagen bildet. Innerhalb der Messeinheit 34 ist eine Einspeiseeinheit 36 zur Erzeugung und Einspeisung eines als Lichtsignal ausgebildeten Messsignals angeordnet. Weiterhin ist innerhalb der Messeinheit 34 eine Auswerteeinheit 38 zur Erfassung und Auswertung des Messsignals angeordnet, nachdem das Messsignal den Lichtwellenleiter 32 durchlaufen hat. Im Ausführungsbeispiel ist daher beispielhaft eine Transmissionsmessung illustriert.

Der Lichtwellenleiter 32 ist vorzugsweise dauerhaft, also mehrere Jahre und vorzugsweise über die gesamte Betriebsdauer des Strukturbauteils 26 an dem zu überwachenden Strukturbauteil 26 befestigt. Die Messeinheit 34 ist beispielsweise ebenfalls dauerhaft mit dem Lichtwellenleiter 32 verbunden. Alternativ hierzu wird sie lediglich in wiederkehrenden Messzyklen an den Lichtwellenleiter 32 angeschlossen, um zu unterschiedlichen, wiederkehrenden Mess-Zeitpunkten das Strukturbauteil 26 zu überprüfen.

Allgemein erfolgen wiederkehrende Messungen beispielsweise im Abstand von ein oder mehreren Monaten. Daneben kann auch eine dauerhafte Überwachung vorgesehen sein, bei der z.B. mehrfach am Tag eine Messung vorgenommen wird.

Wie gut zu erkennen ist, ist der Lichtwellenleiter 32 innerhalb der zu überwachenden Region 28 mäanderförmig verlegt, sodass er also mehrere Schlaufen oder Bögen aufweist.

Bei der Rotation des Rotors kommt es zu zyklischen Wechselbeanspruchungen, insbesondere durch die Gewichtskraft des Rotorblattes 16, speziell in einer Position auf 3 Uhr oder 9 Uhr. Aufgrund dieser Wechselbeanspruchung kann es zum einen zum Auftreten von Rissen 30 kommen. Weist das Strukturbauteil 26 bereits einen Riss 30 auf, so unterliegt dieser ebenfalls einer zyklischen Wechselbeanspruchung, was sich in einer zyklischen Veränderung des Risses 30 niederschlägt. Insbesondere weitet und schließt sich dieser Riss 30 zyklisch in Abhängigkeit der Wechselbelastung. Die Variation des Risses 30, also beispielsweise die Variation einer Breite des Risses 30 liegt beispielsweise im Bereich von einigen 10 µm bis zu einigen 500µm und liegt beispielsweise bei 100 µm. Die Wechselbeanspruchung öffnet / weitet daher den Riss 30 um diesen Betrag. Grundsätzlich ist die hier beschriebene Methode auch zur Erkennung von größeren Rissbewegungen einsetzbar.

Aufgrund der Befestigung des Lichtwellenleiters 32 an der Oberfläche erfährt der Lichtwellenleiter 32 eine entsprechende Längenänderung, welche von der Auswerteeinheit 38 erfasst und ausgewertet wird. Bei einer zyklischen Belastung, die oftmals bei Windkraftanlagen 2 anzutreffen ist, ergibt sich beispielsweise eine in FIG 4 dargestellte Messkurve 40.

In der FIG 4 ist der zeitliche Verlauf eines Signals dargestellt, welches auf dem von der Auswerteeinheit 38 empfangenen optischen Messsignal beruht. Das Signal repräsentiert hierbei bevorzugt die Laufzeit oder einen anderen der bereits vorgestellten Parameter des eingespeisten Lichtes als Messsignals, also bevorzugt die benötigte Laufzeit zwischen der Einspeiseeinheit 36 und der Auswerteeinheit 38. Aus dieser Laufzeit oder aus einem anderen der besagten Parameter kann mit Hilfe eines theoretisch oder experimentell bestimmten Kalibrationsfaktors eine Längenänderung x des Lichtwellenleiters 32 abgeleitet werden. Bei der FIG 4 ist diese Längenänderung x gegenüber der Zeit t aufgetragen

Zu erkennen ist, dass sich die Messkurve 40 und damit die Längenänderung x zyklisch im Verlauf der Zeit t verändert. Über die angeschlossene Elektronik in der Auswerteeinheit 38 werden verschiedene Parameter dieser Messkurve 40 ermittelt und ausgewertet. So werden beispielsweise die Amplitude a der Längenänderung x, die Periode T bzw. die Frequenz der Belastung, die Phase Φ der Änderungen und / oder eventuelle Oberwellen O ermittelt und ausgewertet, die eine Abweichung von einer harmonischen Sinusschwingung beschreiben. Aus diesen Parametern wird durch eine elektronische Verarbeitung die Amplitude a der Belastung und/oder die zyklische Öffnung des Risses 30 und damit dessen Schadpotenzial bestimmt.

Ein zyklisches, d.h. periodisches Messsignal entsteht überall dort, wo auch periodische Belastungen auftreten. Diese sind insbesondere durch die Rotation des Windrades verursacht.

Nichtzyklische Belastungen werden vorzugsweise ebenfalls durch eine elektronische Auswertung des Messsignals mit Methoden der Signalverarbeitung und Mustererkennung erkannt und überwacht. Besonders vorteilhaft kommen sowohl bei zyklischen wie auch nicht-zyklischen Belastungen Auswertungsmethoden des maschinellen Lernens zum Einsatz.

Nichtzyklische Belastungen werden meist in der Praxis von benachbarten zyklischen Belastungen überlagert. Diese Überlagerung können beispielsweise durch Rotorschwingungen, Temperatur oder andere periodisches Lasten/Verformungen drehender Bauteile erzeugt werden. Ebenso sind die Windlasten als teilweise nichtzyklische Belastungen anzusehen. Mittels Mustererkennung und entsprechender Signalverarbeitung und Berücksichtigung von zusätzlichen Parametern (Wind, Drehzahl, Temperatur) lassen sich nun die zyklischen (bekannt durch die eingangs durchgeführte Messung) und nichtzyklischen Belastung trennen und somit eine Zustandsbewertung auch des nicht zyklisch belasten Bauteils gewährleisten. Zur Identifizierung und Auswertung der nichtzyklischen Belastungen werden daher in bevorzugter Ausgestaltung von dem erfassten (Gesamt-) Messsignal (Messkurve 40) die zyklischen Anteile extrahiert, speziell abgezogen, so dass eine resultierende Messkurve als Indikator für die nichtzyklischen Belastungen verbleibt, die dann ausgewertet wird.

Positioniert man den Lichtwellenleiter 32 mehrfach über den Riss 30, wie in FIG 3 dargestellt ist, wird sich die Amplitude a der bei einer zyklischen Belastung periodisch ausgebildeten Messkurve 40 entsprechend um ein Vielfaches erhöhen.

Besonders vorteilhaft ist die erfindungsgemäße Ausprägung bei der Überwachung größerer Bereiche und/oder eine Lokalisierung eines Schadensbereichs wie es insbesondere auch anhand der FIG 5 ersichtlich ist:
FIG 5 zeigt eine Stirnansicht auf ein ringförmiges Strukturbauteil 26, welches insbesondere durch ein Blattlager 18 gebildet ist. Dieses weist wie üblich einen inneren Blattlagerring sowie einen äußeren Blattlagerring 24 auf. Zwischen diesen sind die in der Figur zu erkennenden Wälzkörper angeordnet. Entlang des äußeren Blattlagerrings 24 ist nunmehr um dessen gesamten Umfang der Lichtwellenleiter 32 verlegt und an der Messeinheit 34 angeschlossen. Der Lichtwellenleiter 32 ist beispielsweise an der Außenfläche und damit an der äußeren Umfangsseite des Blattlagerrings 24 entlang verlegt. Alternativ hierzu, wie dies auch in der FIG 5 dargestellt ist, ist er an der Stirnseite des Blattlagerrings 24 entlang verlegt.

Der Umfang und damit die effektive Länge des Lichtwellenleiter 32 liegt dabei typischerweise im Bereich von mehreren Metern, beispielsweise im Bereich zwischen 3 und 25 m und häufig über 8m. Unter effektiver Länge des Lichtwellenleiter 32 wird hierbei die Länge des Lichtwellenleiter 32 verstanden, welcher messaktiv ist, also innerhalb der zu überwachenden Region 28 verlegt ist, in der er mit dem zumindest einen Strukturbauteil 26 fest verbunden ist. Bei der Variante nach FIG 5 entspricht dies dem Umfang. Bei einer 3 MW Windkraftanlage 2 liegt der Umfang und die effektive Länge des Lichtwellenleiters 32 beispielsweise im Bereich zwischen 8 m - 10 m. Damit ist ein sehr großer Überwachungsbereich des Strukturbauteils 26 erhalten.

FIG 5 zeigt beispielsweise die Installation an einem Bauteil des Strukturelementes Blattlager 18. Da dieses Blattlager 18 aus mehr als einem Lagerring 24 bestehen kann, können ebenso sämtliche Lagerringe (Strukturbauteil) einzeln mit gesonderten Lichtwellenleitern überwacht werden.

Darüber hinaus kann die Auswerteeinheit 38 dahingehend ausgebildet sein, dass sie aus den erhaltenen Messdaten insbesondere auch die Position des Risses 30 eingrenzen kann. Im Ausführungsbeispiel bestimmt die Auswerteeinheit 38 daher auch, in welchem Winkelbereich ein Riss 30 aufgetreten ist.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen. Die Erfindung ist in den Ansprüchen definiert.

### Bezugszeichenliste

- 2: Windkraftanlage
- 4: Turm
- 6: Gondel
- 8: Hauptlager
- 10: Rotorwelle
- 12: Rotornabe
- 14: Maschinenträger
- 16: Rotorblatt
- 18: Blattlager
- 20: Drehachse (Blatt)
- 22: Rotationsachse (Rotor)
- 24: Blattlagerring
- 26: Strukturbauteil
- 28: zu überwachende Region
- 30: Riss
- 32: Lichtwellenleiter
- 34: Messeinheit
- 36: Einspeiseeinheit
- 38: Auswerteeinheit
- 40: Messkurve

- a: Amplitude
- T: Periode
- t: Zeit
- x: Länge
- Φ: Phase
- O: Oberwelle

## Patentansprüche

1. Verfahren zur Detektion und Überwachung einer Strukturveränderung bei zumindest einem Strukturbauteil (26) einer Windkraftanlage (2), nämlich zur Überwachung eines Strukturbauteils (26) auf einen Materialriss oder zur Überwachung eines Abstandes zwischen zwei Strukturbauteilen, wobei wenigstens ein Lichtwellenleiter (32) im Bereich der Oberfläche des zumindest einen Strukturbauteiles positioniert ist und entlang einer zu überwachenden Region des Strukturbauteils (26) geführt ist, derart, dass eine Strukturveränderung zu einer Längenänderung des Lichtwellenleiters (32) führt, wobei weiterhin ein Messsignal durch den Lichtwellenleiter (32) geführt ist, welches im Hinblick auf die Längenänderung, also im Hinblick auf eine Längung / Stauchung des Lichtwellenleiters (32) ausgewertet wird und wobei hieraus ein Rückschluss auf die Strukturveränderung gezogen wird, wobei es sich bei dem Lichtwellenleiter (32) um einen dehnbaren, polymeren Lichtwellenleiter (32) handelt, welcher eine Elastizität aufweist und welcher mit dem Strukturbauteil (26) stoffschlüssig verbunden wird, wobei durch die Elastizität periodisch wiederkehrende Strukturveränderungen erfasst werden und der Lichtwellenleiter einer periodisch wiederkehrenden Belastung unterliegt, sodass er periodisch wiederkehrend gedehnt / gestaucht wird.

2. Verfahren gemäß dem vorhergehenden Anspruch, bei dem als Messsignal in den Lichtwellenleiter (32) zumindest ein Lichtimpuls und / oder ein moduliertes Lichtsignal eingespeist wird und eine Auswertung von einem oder mehreren der nachfolgenden Parametern erfolgt:
- Lichtlaufzeit,
- Lichtleistung,
- Lichtverteilung im Querschnitt des Lichtwellenleiters (32),
- Verteilung der Lichtaustrittswinkel aus dem Lichtwellenleiter (32),
- Amplitude (a) und Phase (Φ) einer Modulation des Messsignals bei einer oder mehrerer Modulationsfrequenzen, oder
- Polarisationseigenschaften des aus dem Lichtwellenleiter (32) austretenden Lichtes.

3. Verfahren gemäß einem der vorhergehenden Ansprüche, bei dem der Lichtwellenleiter (32) mehrfach über die zu überwachende Region der zumindest einen Strukturkomponente geführt wird, derart, dass der Lichtwellenleiter (32) bei Auftreten einer Strukturveränderung eine Mehrfachdehnung erfährt.

4. Verfahren gemäß einem der vorhergehenden Ansprüche, bei dem eine Trennstelle zwischen zwei Strukturbauteilen überwacht wird, indem der Lichtwellenleiter (32) mehrfach über die Trennstelle geführt wird.

5. Verfahren gemäß einem der vorhergehenden Ansprüche, bei dem der Lichtwellenleiter (32) wellen- oder mäanderförmig über die zu überwachende Region geführt ist.

6. Verfahren gemäß einem der vorhergehenden Ansprüche, bei dem der Lichtwellenleiter (32) einen großflächigen Bereich des Strukturbauteils (26) überwacht.

7. Verfahren gemäß einem der vorhergehenden Ansprüchen, bei dem der Lichtwellenleiter (32) um den Umfang des zu überwachenden Strukturbauteils (26) verlegt ist.

8. Verfahren gemäß einem der vorhergehenden Ansprüche, bei dem der Lichtwellenleiter (32) um den Umfang einer Verbindung, insbesondere eine Flanschverbindung, zwischen zwei Strukturbauteilen geführt ist, zur Überwachung des Abstandes zwischen den beiden Strukturbauteilen.

9. Verfahren gemäß einem der vorhergehenden Ansprüchen, bei dem das zumindest eine Strukturbauteil ausgewählt ist aus einem Rotorlagerring, einem Blattlagerring (24), ein Turmsegment, eine Rotornabe (12), ein Rotorblatt (12), ein Maschinenträger (14).

10. Verfahren gemäß einem der vorhergehenden Ansprüchen, bei dem die Position des Materialrisses ermittelt wird.

11. Verfahren gemäß einem der vorhergehenden Ansprüchen, bei der die Position eines oder mehrerer Materialrisse durch Messung und Auswertung von einem oder mehreren der nachfolgenden Parametern ermittelt wird, nämlich
- der Lichtleistung,
- der Lichtverteilung im Querschnitt des Lichtwellenleiters (32),
- der Verteilung der Lichtaustrittswinkel aus dem Lichtwellenleiter (32),
- Amplitude (a) und Phase (Φ) einer Modulation des Messsignals bei einer oder mehrerer Modulationsfrequenzen, oder
- Polarisationseigenschaften des aus dem Lichtwellenleiter (32) austretenden Lichtes.

12. Verfahren gemäß einem der vorhergehenden Ansprüche, bei dem bei periodischen Belastungen ein oder mehrere und vorzugsweise alle Parameter des Messsignals der Auswerteeinheit (38) wie Amplitude (a), Periode (T), Phase (Φ) oder Oberwellen (O) erfasst und ausgewertet werden.

13. Verfahren gemäß einem der vorhergehenden Ansprüche, bei dem eine Belastung, insbesondere eine nichtzyklische Belastung durch eine elektronische Auswertung des Messsignals mit Methoden der Signalverarbeitung oder Mustererkennung oder beidem erfolgt.

14. Verfahren gemäß einem der vorhergehenden Ansprüche, bei dem die Messung und Auswertung sowohl gleichzeitig als auch alternativ in Reflexion oder in Transmission erfolgen.

## Claims

1. Method for detecting and monitoring a structural change in at least one structural component (26) of a wind turbine (2), specifically for monitoring a structural component (26) for a material crack or for monitoring a distance between two structural components, wherein at least one optical waveguide (32) is positioned in the region of the surface of the at least one structural component and is guided along a region to be monitored of the structural component (26), in such a way that a structural change leads to a change in length of the optical waveguide (32), wherein furthermore a measurement signal is guided through the optical waveguide (32), and is evaluated in regard to the change in length, i.e**.** in regard to elongation / compression of the optical waveguide (32), and wherein a conclusion about the structural change is drawn therefrom, wherein the optical waveguide (32) is a stretchable, polymeric optical waveguide (32), which has an elasticity and which is connected to the structural component (26) in a materially bonded manner, wherein as a result of the elasticity periodically recurring structural changes are detected and the optical waveguide is subject to a periodically recurring load, such that it is periodically recurringly stretched / compressed.

2. Method according to the preceding claim, wherein at least one light pulse and/or a modulated light signal are/is fed into the optical waveguide (32) as measurement signal and an evaluation of one or more of the following parameters is carried out:
- light propagation time,
- light power,
- light distribution in the cross section of the optical waveguide (32),
- distribution of the light emergence angles from the optical waveguide (32),
- amplitude (a) and phase (Φ) of a modulation of the measurement signal at one or more modulation frequencies, or
- polarization properties of the light emerging from the optical waveguide (32).

3. Method according to either of the preceding claims, wherein the optical waveguide (32) is repeatedly guided over the region to be monitored of the at least one structural component, in such a way that the optical waveguide (32) experiences multiple stretching in the event of a structural change.

4. Method according to any of the preceding claims, wherein a separation point between two structural components is monitored by the optical waveguide (32) being repeatedly guided over the separation point.

5. Method according to any of the preceding claims, wherein the optical waveguide (32) is guided in a wavy or meandering manner over the region to be monitored.

6. Method according to any of the preceding claims, wherein the optical waveguide (32) monitors a large-area region of the structural component (26).

7. Method according to any of the preceding claims, wherein the optical waveguide (32) is placed around the circumference of the structural component (26) to be monitored.

8. Method according to any of the preceding claims, wherein the optical waveguide (32) is guided around the circumference of a connection, in particular a flange connection, between two structural components, for the purpose of monitoring the distance between the two structural components.

9. Method according to any of the preceding claims, wherein the at least one structural component is selected from a rotor bearing ring, a blade bearing ring (24), a tower segment, a rotor hub (12), a rotor blade (12), a machine carrier (14).

10. Method according to any of the preceding claims, wherein the position of the material crack is determined.

11. Method according to any of the preceding claims, wherein the position of one or more material cracks is determined by measurement and evaluation of one or more of the following parameters, specifically
- the light power,
- the light distribution in the cross section of the optical waveguide (32),
- the distribution of the light emergence angles from the optical waveguide (32),
- amplitude (a) and phase (Φ) of a modulation of the measurement signal at one or more modulation frequencies, or
- polarization properties of the light emerging from the optical waveguide (32).

12. Method according to any of the preceding claims, wherein under periodic loads one or more and preferably all parameters of the measurement signal of the evaluation unit (38) such as amplitude (a), period (T), phase (Φ) or harmonics (O) are detected and evaluated.

13. Method according to any of the preceding claims, which involves implementing a load, in particular a noncyclic load, by way of an electronic evaluation of the measurement signal using methods of signal processing or pattern recognition or both.

14. Method according to any of the preceding claims, wherein the measurement and evaluation are carried out both simultaneously and alternatively in reflection or in transmission.

## Revendications

1. Procédé destiné à détecter et à surveiller un changement structural d'au moins un composant structural (26) d'une éolienne (2), notamment à surveiller un composant structural (26) pour détecter une fissure de matériau ou à surveiller une distance entre deux composants structuraux, au moins un guide d'ondes optiques (32) étant positionné dans la zone de la surface dudit au moins un composant structural et étant amené à passer le long d'une région à surveiller du composant structural (26), de telle sorte qu'un changement structural entraîne une variation de la longueur du guide d'ondes optiques (32), un signal de mesure étant en outre guidé à travers le guide d'ondes optiques (32), lequel est évalué en fonction de la variation de la longueur, c'est-à-dire en fonction d'un allongement / d'une compression du guide d'ondes optiques (32), et une conclusion en étant tirée sur le changement structural, le guide d'ondes optiques (32) étant un guide d'ondes optiques (32) polymère extensible, qui présente une certaine élasticité et qui est relié au composant structural (26) par complémentarité de matériau, des changements structuraux périodiques étant détectés par le biais de l'élasticité et le guide d'ondes optiques étant soumis à une sollicitation périodique récurrente, de telle sorte qu'il est allongé / comprimé de manière périodique.

2. Procédé selon la revendication précédente, dans lequel au moins une impulsion lumineuse et/ou un signal lumineux modulé est injecté en tant que signal de mesure dans le guide d'ondes optiques (32) et une évaluation d'un ou de plusieurs des paramètres suivants est effectuée :
- temps de propagation de la lumière,
- puissance lumineuse,
- répartition de la lumière dans la section transversale du guide d'ondes optiques (32),
- répartition des angles de sortie de la lumière du guide d'ondes optiques (32),
- amplitude (a) et phase (Φ) d'une modulation du signal de mesure à une ou plusieurs fréquences de modulation, ou
- propriétés de polarisation de la lumière sortant du guide d'ondes optiques (32).

3. Procédé selon l'une quelconque des revendications précédentes, dans lequel le guide d'ondes optiques (32) est amené à passer plusieurs fois à travers la région à surveiller dudit au moins un composant structural, de telle sorte que le guide d'ondes optiques (32) soit soumis à un allongement multiple lorsqu'un changement structural se produit.

4. Procédé selon l'une quelconque des revendications précédentes, dans lequel un point de séparation entre deux composants structuraux est surveillé en faisant passer le guide d'ondes optiques (32) plusieurs fois par le point de séparation.

5. Procédé selon l'une quelconque des revendications précédentes, dans lequel le guide d'ondes optiques (32) est amené à passer de manière ondulée ou sinueuse sur la région à surveiller.

6. Procédé selon l'une quelconque des revendications précédentes, dans lequel le guide d'ondes optiques (32) surveille une zone de grande superficie du composant structural (26).

7. Procédé selon l'une quelconque des revendications précédentes, dans lequel le guide d'ondes optiques (32) est installé sur la circonférence du composant structural (26) à surveiller.

8. Procédé selon l'une quelconque des revendications précédentes, dans lequel le guide d'ondes optiques (32) est amené à passer sur la circonférence d'une liaison, en particulier d'une liaison par bride, entre deux composants structurels, pour surveiller la distance entre les deux composants structuraux.

9. Procédé selon l'une quelconque des revendications précédentes, dans lequel ledit au moins un composant structural est choisi parmi un anneau de palier de rotor, un anneau de palier de pale (24), un segment de tour, un moyeu de rotor (12), une pale de rotor (12), un support de machine (14).

10. Procédé selon l'une quelconque des revendications précédentes, dans lequel la position de la fissure de matériau est déterminée.

11. Procédé selon l'une quelconque des revendications précédentes, dans lequel la position d'une ou de plusieurs fissures de matériau est déterminée par mesure et évaluation d'un ou de plusieurs des paramètres suivants, à savoir
- la puissance lumineuse,
- la répartition de la lumière dans la section transversale du guide d'ondes optiques (32),
- la répartition des angles de sortie de la lumière du guide d'ondes optiques (32),
- l'amplitude (a) et la phase (Φ) d'une modulation du signal de mesure à une ou plusieurs fréquences de modulation, ou
- les propriétés de polarisation de la lumière sortant du guide d'ondes optiques (32).

12. Procédé selon l'une quelconque des revendications précédentes, dans lequel, lors de sollicitations périodiques, un ou plusieurs et de préférence tous les paramètres du signal de mesure de l'unité d'évaluation (38) tels que l'amplitude (a), la période (T), la phase (Φ) ou les harmoniques (O) sont détectés et évalués.

13. Procédé selon l'une quelconque des revendications précédentes, dans lequel une sollicitation, en particulier une sollicitation non cyclique, est effectuée par une évaluation électronique du signal de mesure par des méthodes de traitement du signal ou de reconnaissance de forme, ou les deux.

14. Procédé selon l'une quelconque des revendications précédentes, dans lequel la mesure et l'évaluation sont effectuées aussi bien simultanément qu'en alternance, en réflexion ou en transmission.
